# EUROPÄISCHE PATENTSCHRIFT

(11) **EP 4 111 088 B1**
(45) Veröffentlichungstag und Bekanntmachung des Hinweises auf die Patenterteilung: **31.12.2025**
(21) Anmeldenummer: 21703005.5
(22) Anmeldetag: 01.02.2021
(51) Int. Cl.: F17C 7/00

(54) **VORRICHTUNG ZUR KRAFTSTOFFVERSORGUNG UND FAHRZEUG MIT EINER DERARTIGEN VORRICHTUNG**
DEVICE FOR SUPPLYING FUEL AND VEHICLE COMPRISING A DEVICE OF THIS TYPE
DISPOSITIF D'ALIMENTATION EN CARBURANT ET VÉHICULE COMPRENANT UN TEL DISPOSITIF

(30) Priorität: 26.02.2020 DE 102020001257
(43) Veröffentlichungstag der Anmeldung: 04.01.2023
(73) Patentinhaber: MAN Truck & Bus SE, 80995 München (DE)
(72) Erfinder: BUHL, Stefan, 80995 München (DE); HOFMANN, Alexander, 80995 München (DE)
(74) Vertreter: v. Bezold & Partner Patentanwälte - PartG mbB
(86) Internationale Anmeldenummer: PCT/EP2021/052298
(87) Internationale Veröffentlichungsnummer: WO 2021/170344

(56) Entgegenhaltungen:
- WO-A1-2011/042215
- DE-A1- 10 237 164
- DE-A1- 10 242 804
- US-A1- 2013 206 257
- US-A1- 2018 313 496

## Beschreibung

Die Erfindung betrifft eine Vorrichtung zur Versorgung eines Kraftstoffverbrauchers eines Fahrzeugs mit gasförmigem Kraftstoff sowie ein Fahrzeug mit einer derartigen Vorrichtung.

Zum Antrieb von Fahrzeugen sind im Stand der Technik verschiedenste Konzepte bekannt. Neben der Umwandlung elektrischer Energie in mechanische Arbeit mittels Elektromotoren ist dabei insbesondere die Umwandlung von in Form von Kraftstoffen gespeicherter chemischer Energie in mechanische Arbeit verbreitet. Als Kraftstoffe werden hierbei zumeist unter Normalbedingungen flüssige Kraftstoffe, wie z. B. Diesel, Benzin und/oder Kerosin, verwendet; jedoch finden zunehmend auch unter Standardbedingungen gasförmige Kraftstoffe, darunter z. B. Wasserstoff oder Erdgas (Methan), Verwendung.

Das Mitführen bzw. die Speicherung der letztgenannten Kraftstoffe im Fahrzeug kann - neben der Lagerung in tiefkalter verflüssigter Form oder der Einlagerung in ein Trägermaterial - insbesondere durch starkes Komprimieren der Gase in Druckbehältern erfolgen, was aktuell von den meisten Fahrzeugherstellern bevorzugt wird. Das Speicherdruckniveau kann dabei beispielsweise bis zu 700 bar betragen. Das anschließende Einbringen des gasförmigen Kraftstoffs in Energiewandler - wie z. B. eine Brennstoffzelle oder eine Verbrennungskraftmaschine - findet anschließend allerdings zumeist bei deutlich niedrigeren Drücken statt, sodass zuvor in der Regel eine entsprechende Druckreduzierung bzw. Druckminderung erfolgt, was für die meisten Gase mit einem Abkühlen bzw. einem Freisetzen von Expansionskälte einhergeht (Joule-Thomson-Effekt).

Unabhängig davon findet bei der Entnahme ein Abkühlen des im Druckbehälter verbleibenden Gases statt. Dies resultiert daraus, dass aus der Entnahmeöffnung vorranging die schnellsten Teilchen des Gasensembles entweichen, wodurch die mittlere kinetische Energie der verbleibenden Gasteilchen und damit insgesamt die innere Energie des Gases im Druckbehälter sinkt. Im Zusammenhang mit diesem, im Folgenden als Freisetzung von Entnahmekälte bezeichneten, Effekt wurde z. B. bei der Entleerung von Wasserstoff aus kommerziell erhältlichen Tanks (Betriebsdruck 700 bar) für schnelle Entleerungen mit hohen Massenströmen ein Abkühlen des Gases von Raumtemperatur auf bis zu -40 °C gemessen ("The effect of defueling rate on the temperature evolution of on-board hydrogen tanks" N. de Miguel et al. Int. J. Hydrogen Energ. 40, 14768, 2015). In der Regel wird diese Kälte ungenutzt an die Fahrzeugumgebung abgegeben und/oder ist im Fall von "üblichen" Entnahmen zu gering, um für anderweitige Kühlanwendungen, z. B. die Kühlung der Brennkraftmaschine, genutzt werden zu können.

In diesem Zusammenhang ist aus der US 2018/313496 A1 ein Mehrbehälter-Flüssigkeitsspeicher- und -Liefersystem bekannt, das besonders in Systemen mit Verbrennungsmotoren nützlich ist, die gasförmige Kraftstoffe verwenden. Das System kann gasförmige Fluide mit höheren Durchflussraten liefern, als sie allein durch Dampfdruckaufbaukreise zuverlässig erreicht werden können, und es hält den Druck im Inneren des Speicherbehälters niedriger, so dass es die Betankungszeit reduziert und danach einen schnellen Start ermöglicht. Das System ist so konzipiert, dass es ein gasförmiges Fluid in verflüssigter Form in einer Vielzahl von Speicherbehältern speichert, einschließlich eines Primärspeicherbehälters, der mit einer Pumpenvorrichtung verbunden ist, und eines oder mehrerer Nebenbehälter, die zusammen mit einem Steuersystem ein verflüssigtes gasförmiges Fluid effizient speichern und das Fluid schnell als Gas an einen Endverbraucher abgeben, selbst wenn hohe Durchflussraten erforderlich sind. Das System steuert den Betrieb des Pumpengeräts in Abhängigkeit vom gemessenen Flüssigkeitsdruck und regelt den Flüssigkeitsdruck in einer Versorgungsleitung nach vorgegebenen Druckwerten, die auf vorgegebenen Systembetriebsbedingungen basieren.

Die WO 2011/042215 A1 offenbart ein Kühlsystem zum Kühlen eines Brennstoffzellensystems in einem Fahrzeug, welches zur thermischen Verbindung mit Kraftstoff in einem Kraftstofftank dient. Dies führt zur Verwendung des Kraftstoffs in einem Kraftstofftank als Wärmesenke mit hoher Wärmekapazität und einer im Wesentlichen gleichbleibenden Kühlleistung aufgrund relativ stabiler Temperatur des Kraftstoffs. Dadurch kann die Kühlung des Brennstoffzellensystems mit sehr einfachen Mitteln und einem besonders niedrigen Gewicht realisiert werden.

Aus der DE 102 37 164 A1 ist eine Brennstoffzellenanlage mit einer Brennstoffzelleneinheit, einem Brennstoffdruckspeicher zur Speicherung eines mit Speicherdruck beaufschlagten Brennstoffs und einer Druckmindereinheit zur Verminderung des Speicherdrucks auf einen Betriebsdruck bekannt, mit der der Gesamtwirkungsgrad der Anlage gegenüber dem Stand der Technik erhöht wird. Dies wird dadurch erreicht, dass die Druckmindereinheit als Kühlvorrichtung zur Kühlung wenigstens eines Kühlelementes ausgebildet ist.

Die DE 102 42 804 A1 offenbart ein Energiespeicher- und Versorgungssystem zur Speicherung von Wasserstoff unter hohem Druck und zu dessen Zumessung als Brennstoff für eine Brennkraftmaschine und/oder für ein Brennstoffzellensystem, das insbesondere zum Antrieb eines Kraftfahrzeuges vorgesehen ist. Das System umfasst einen Hochdruckspeicher und eine diesem nachgeordnete Expansionseinrichtung zur Reduzierung des Speicherdrucks auf einen zur Energiewandlung in der Brennkraftmaschine und/oder dem Brennstoffzellensystem geeigneten Druck. Es ist vorgesehen, dass die Expansionseinrichtung eine Vorrichtung zur Erwärmung des Wasserstoffs während der Expansion aufweist.

Aus der US 2013/206257 A1 ist ein Brennstoffversorgungssystem bekannt, welches einen Brennstofftank, einen Temperaturerfassungsabschnitt, einen Brennstoffgasauslassströmungsweg, ein Hauptabsperrventil, das in dem Brennstoffgasauslassströmungsweg vorgesehen ist, und einen Steuerabschnitt umfasst. Das Hauptabsperrventil umfasst einen Einlassabschnitt und einen Auslassabschnitt, ein Hauptventil, das zwischen dem Einlassabschnitt und dem Auslassabschnitt angeordnet ist und das den Brennstoffgasauslassströmungsweg öffnet und schließt, einen Vorsteuerströmungsweg, der so vorgesehen ist, dass er den Einlassabschnitt mit dem Auslassabschnitt verbindet, ein Vorsteuerventil, das den Vorsteuerströmungsweg öffnet und schließt, und ein Stellglied, das das Hauptventil und das Vorsteuerventil zu unterschiedlichen Zeiten öffnen und schließen kann. Der Steuerabschnitt öffnet das Vorsteuerventil und schließt das Hauptventil, wenn die erfasste Temperatur gleich oder niedriger als eine erste Referenztemperatur ist.

Entsprechend ist es daher Aufgabe der Erfindung, eine Lösung bereitzustellen, mit der die Nachteile der bisherigen Lösungen vermieden werden können. Insbesondere ist es dabei eine Aufgabe der Erfindung, eine Lösung bereitzustellen, mittels derer der Gesamtwirkungsgrad eines mit gasförmigem Kraftstoff betriebenen Fahrzeugs erhöht werden kann.

Diese Aufgaben können mit den Merkmalen des unabhängigen Anspruchs 1 gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Der Grundgedanke der Erfindung besteht hierbei darin, durch eine gezielte Entnahme aus einzelnen Sektionen des Kraftstoffspeichers eine möglichst starke Unterkühlung des Kraftstoffs innerhalb des Tanks hervorzurufen und diese Kälte in einen Kühlkreislauf des Fahrzeugs einzuspeisen.

Es ein Fahrzeug aufweisend einen Kraftstoffverbraucher und eine Vorrichtung zur Versorgung des Kraftstoffverbrauchers, beispielsweise einer Brennstoffzelle und/oder einer Verbrennungskraftmaschine, des Fahrzeugs mit gasförmigen Kraftstoff (z. B. Erdgas oder Wasserstoff) bereitgestellt. Hierbei umfasst die Vorrichtung mehrere Druckspeicher (z. B. Druckgastanks) zur Lagerung und Bereitstellung von mit Druck beaufschlagtem Kraftstoff. Lediglich beispielhaft kann der Kraftstoff dabei mit einem Druck, der auch als Speicherdruck bezeichnet werden kann, von mehreren hundert bar, beispielsweise 100 bis 700 bar, beaufschlagt sein.

Weiterhin umfasst die Vorrichtung eine Entnahmeeinrichtung, die die mehreren Druckspeicher mit dem Kraftstoffverbraucher fluidisch verbindet. Dazu kann die Entnahmeeinrichtung z. B. über entsprechende Rohr- und/oder Schlauchleitungen verfügen.

Um nun auf vorteilhafte Weise ein Nutzen einer bei einer Kraftstoffentnahme auftretenden Temperaturänderung, vorzugsweise einer bei der Entnahme von Kraftstoff freigesetzten Entnahmekälte, zu ermöglichen, ist die Entnahmeeinrichtung an einen Kühlkreislauf des Fahrzeugs thermisch gekoppelt. Wie vorstehend ausgeführt, kann unter dem Ausdruck "Entnahmekälte" hierbei die durch die Kraftstoffentnahme induzierte Wärmeabnahme des Kraftstoffs in den entsprechenden Druckspeichern verstanden werden. Bevorzugt handelt es sich bei dem eben erwähnten Kühlkreislauf um einen Kühlkreislauf zur Kühlung des Kraftstoffverbrauchers. Letzteres ist besonders vorteilhaft, da mit einer hohen Antriebsleistung (und damit einer hohen Abwärmeerzeugung) in der Regel auch eine entsprechend hohe Kraftstoffentnahme (und damit eine entsprechend hohe Entnahmekälteerzeugung) einhergeht.

Erfindungsgemäß umfasst die Entnahmeeinrichtung dabei eine Ventilanordnung, mittels derer eine Entnahme von Kraftstoff aus jedem der mehreren Druckspeicher einzeln steuerbar ist. Mit anderen Worten kann die Ventilanordnung ausgebildet sein, jeden der mehreren Druckspeicher separat für eine Kraftstoffentnahme zu öffnen und anschließend zu schließen. Zur Ansteuerung der Ventilanordnung umfasst die Entnahmeeinrichtung ferner eine Ventilsteuereinrichtung , die zum einen ausgebildet ist, eine Druckspeicherteilmenge festzulegen, die angibt, aus welchem der mehreren Druckspeicher Kraftstoff entnommen werden soll, und zum anderen ausgebildet ist, die Ventilanordnung in Abhängigkeit von der festgelegten Druckspeicherteilmenge derart anzusteuern, dass dem Kraftstoffverbraucher nur Kraftstoff aus der festgelegten Druckspeicherteilmenge zugeführt wird. Vorzugsweise handelt es sich bei der festgelegten Druckspeicherteilmenge um eine echte Teilmenge der mehreren Druckspeicher. Die festgelegte Druckspeicherteilmenge kann ggf. jedoch auch alle Druckspeicher umfassen. Durch die vorgenannte Ansteuerung wird auf vorteilhafte Weise eine gezielte Erzeugung von Entnahmekälte ermöglicht, da beispielsweise durch eine vorrangige Entnahme aus nur wenigen Druckspeichern und dem damit verbundenen üblicherweise starken Druckabfall in diesen Behältern eine stärkere Abkühlung des Kraftstoffs als im Fall einer gleichzeitigen Entnahme aus allen Tanks erzeugt werden kann.

Nach einem weiteren Aspekt der Erfindung kann die Ventilsteuereinrichtung ausgebildet sein, die Druckspeicherteilmenge derart festzulegen, dass eine bei der Entnahme von Kraftstoff freigesetzte Entnahmekälte maximiert wird. Mit anderen Worten soll durch die entsprechende Wahl der Druckspeicherteilmenge möglichst viel Entnahmekälte freigesetzt werden. Dies kann z. B. durch entsprechende Vorversuche ermittelt werden, wobei experimentell für verschiedene Druckspeicherteilmengen jeweils die freigesetzte Entnahmekälte gemessen wird und hieraus diejenige Druckspeicherteilmenge bestimmt wird, die unter den gegebenen Betriebsbedingungen die Entnahmekälte maximiert. In der Regel wird dies durch eine Entnahme aus möglichst wenigen Druckspeichern, d. h. einer geringen Druckspeicherteilmenge, bewirkt, da dann der Druckabfall und damit die Temperaturabnahme maximiert wird. Eine Randbedingung kann hierbei allerdings der tatsächliche Kraftstoffbedarf des Kraftstoffverbrauchers sein, sodass unter dem Ausdruck "Entnahme" fachmännisch eine den Bedarf des Kraftstoffverbrauches deckende Entnahme verstanden werden soll. Auf vorteilhafte Weise kann durch dieses Merkmal ein hoher Kälteeintrag in den Kühlkreislauf realisiert werden.

Gemäß einem weiteren Aspekt der Erfindung kann die Ventilsteuereinrichtung ausgebildet sein, die Druckspeicherteilmenge zur Vergrößerung einer bei der Entnahme von Kraftstoff freigesetzten Entnahmekälte derart festzulegen, dass bei der Entnahme von Kraftstoff ein möglichst hoher Druckabfall in der Druckspeicherteilmenge erfolgt. Da der Druckabfall bei einer Entnahme aus einem Druckspeicher im Regelfall mit der entnommenen Gasmenge korreliert, kann die Ventilsteuereinrichtung somit ausgebildet sein, die Druckspeicherteilmenge derart festzulegen, dass eine möglichst hohe Gasentnahme aus der Druckspeicherteilmenge erfolgt.

Zudem oder alternativ kann die Ventilsteuereinrichtung auch ausgebildet sein, die Druckspeicherteilmenge zur Vergrößerung einer bei der Entnahme von Kraftstoff freigesetzten Entnahmekälte derart festzulegen, dass bei der Entnahme von Kraftstoff in der Druckspeicherteilmenge ein höherer Druckabfall als im Fall einer gleichmäßigen Entnahme aus den mehreren Druckspeichern erfolgt. Der Ausdruck "gleichmäßige Entnahme" aus den mehreren Druckspeichern bedeutet hierbei, dass aus jedem der mehreren Druckspeicher im Wesentlichen gleich viel Kraftstoff entnommen wird bzw. dass jeder der mehreren Druckspeicher im Wesentlichen in gleicher Weise (gleicher Volumenfluss) entleert wird. Mit anderen Worten kann die Ventilsteuereinrichtung ausgebildet sein, eine echte Teilmenge der mehreren Druckspeicher als Druckspeicherteilmenge festzulegen. Auf vorteilhafte Weise kann durch die vorstehenden Arten der Festlegung der Druckspeicherteilmenge wiederum ein hoher Kälteeintrag in den Kühlkreislauf und damit eine entsprechend hohe Kühlleistung des Kühlkreislaufs erreicht werden.

Nach einer ersten erfindungsgemäßen Variante kann die Ventilsteuereinrichtung ausgebildet sein, die Druckspeicherteilmenge umso kleiner festzulegen, je größer ein aktueller und/oder zu erwartender Wärmeeintrag in den Kühlkreislauf ist. Vorzugsweise handelt es sich hierbei um einen Wärmeeintrag einer vom Kühlkreislauf zu kühlenden Komponente, wie z. B. den Kraftstoffverbraucher. Ist beispielsweise eine hohe Leistung und damit entsprechend hohe Wärmeerzeugung bei einer an den Kühlkreislauf angeschlossenen Komponente zu erwarten, kann auf vorteilhafte Weise durch entsprechendes Reduzieren der Druckspeicherteilmenge deren erzeugte Entnahmekälte vergrößert werden und dadurch der Kälteeintrag in den Kühlkreislauf erhöht werden.

Zudem oder alternativ kann die Ventilsteuereinrichtung auch nach einer zweiten erfindungsgemäßen Variante ausgebildet sein, die Druckspeicherteilmenge umso kleiner festzulegen, je größer eine aktuelle und/oder zu erwartende Soll-Kühlleistung des Kühlkreislaufs ist. Als Soll-Kühlleistung kann dabei eine Größe verstanden werden, die angibt, wie viel Wärmeenergie je Zeiteinheit vom Kühlkreislauf möglichst abgeführt werden soll. Mit anderen Worten kann die Soll-Kühlleistung auch als Bedarf an Kühlleistung verstanden werden. Auf vorteilhafte Weise wird dadurch insgesamt eine bedarfsgerechte Steuerung der Kraftstoffentnahme und der Kälteerzeugung erreicht.

Gemäß einem weiteren Aspekt der Erfindung kann die Ventilsteuereinrichtung ausgebildet sein, in einer Entnahmephase, d. h. in einer Betriebsphase, in der Kraftstoff zumindest aus einem Teil der Druckspeicher entnommen wird, die mehreren Druckspeicher nacheinander zu entleeren. Der Ausdruck "nacheinander" soll hierbei sowohl ein aufeinanderfolgendes Entleeren einzelner Druckspeicher bezeichnen; jedoch auch ein aufeinanderfolgendes Entleeren von Druckspeichergruppen bzw. Druckspeicherteilmengen umfassen. Beispielsweise können gemäß diesem Aspekt auch zunächst zwei Druckspeicher entleert werden, anschließend weitere zwei Druckspeicher etc. In der Regel kann dadurch auf vorteilhafte Weise eine höhere Kühlleistung erzielt werden, als dies bei einer gleichzeitigen Entnahme aus allen Druckspeichern der Fall wäre.

Nach einem weiteren Aspekt der Erfindung kann die Entnahmeeinrichtung ausgebildet sein, in einer Nicht-Entnahmephase, d. h. in einer Betriebsphase, in der Kraftstoff gerade aus keinem der Druckspeicher entnommen wird, einen Druckausgleich zwischen den mehreren Druckspeichern vorzunehmen. Beispielsweise kann es sich dabei bei der Nicht-Entnahmephase um eine Schubbetriebsphase und/oder eine Rekuperationsphase des Fahrzeugs handeln. Auf vorteilhafte Weise können dadurch ggf. unerwünscht hohe Druckdifferenzen zwischen den einzelnen Druckspeichern vermieden bzw. wieder ausgeglichen werden.

Gemäß einem weiteren Aspekt der Erfindung kann die Ventilsteuereinrichtung ausgebildet sein, die Druckspeicherteilmenge auf Basis einer Soll-Kühlleistung und/oder einer Temperatur des Kühlkreislaufs (z. B. einer Vorlauf- oder Rücklauftemperatur des Kühlmittels) festzulegen. Zudem oder alternativ kann die Ventilsteuereinrichtung auch ausgebildet sein, die Druckspeicherteilmenge auf Basis von Drücken und/oder Füllständen der mehreren Druckspeicher festzulegen. Beispielsweise können die jeweiligen Drücke der einzelnen Druckspeicher und/oder die jeweiligen Füllstände, d. h. die jeweils in den Druckspeichern vorhandene Gasmenge, bei der Festlegung der Druckspeicherteilmenge berücksichtigt werden. Zudem oder alternativ kann die Ventilsteuereinrichtung auch ausgebildet sein, die Druckspeicherteilmenge auf Basis einer Nutzervorgabe und/oder eines Kraftstoffbedarfs des Kraftstoffverbrauchers festzulegen. All diese Parameter ermöglichen auf vorteilhafte Weise eine möglichst effiziente und bedarfsgerechte Kraftstoffzuführung und Kälteerzeugung, wobei die exakte betriebsphasenabhängige Zielfunktion bzw. Vorschrift, anhand derer die Druckspeicherteilmenge festgelegt werden soll, wiederum z. B. mittels geeigneter Vorversuche oder Prüfstandmessungen ermittelt werden kann.

Neben einem grundsätzlichen Festlegen, aus welcher Teilmenge der Druckspeicher Kraftstoff entnommen werden soll, kann die Ventilsteuereinrichtung auf vorteilhafte Weise auch eingerichtet sein, zu steuern "wie viel" Kraftstoff aus dem jeweiligen Druckspeicher entnommen werden soll. Beispielsweise kann zur Erzielung eines bestimmten Gesamtvolumenstroms an Kraftstoff zum Kraftstoffverbraucher aus manchen der Druckspeicher ein möglichst hoher Teilvolumenstrom, d. h. ein möglichst hohes entnommenes Gasvolumen pro Zeitspanne, entnommen werden, während aus anderen nur ein geringer Teilvolumenstrom entnommen wird. Hierzu kann nach einem weiteren Aspekt der Erfindung die Ventilanordnung ausgebildet sein, Teilvolumenströme aus den einzelnen Druckspeichern der festgelegten Druckspeicherteilmenge in Abhängigkeit von einer Ansteuerung durch die Ventilsteuereinrichtung zu steuern. Mit anderen Worten soll die Ventilanordnung eine, vorzugsweise kontinuierliche oder stufenweise, Variation der Volumenströme der jeweiligen Druckspeicher ermöglichen können.

Weiterhin kann die Ventilsteuereinrichtung in diesem Zusammenhang ausgebildet sein, die vorgenannten Teilvolumenströme derart festzulegen, dass eine bei der Entnahme von Kraftstoff freigesetzte Entnahmekälte maximiert wird, d. h. möglichst viel Entnahmekälte freigesetzt wird. Hierbei können die genauen Steuervorschriften, welche unter anderem von der konkreten Ausgestaltung der Vorrichtung und dem verwendeten Kraftstoff abhängig sind, z. B. durch experimentelle Vorversuche ermittelt werden. Zudem oder alternativ kann die Ventilsteuereinrichtung in diesem Zusammenhang auch ausgebildet sein, die Teilvolumenströme zur Steuerung der bei der Entnahme von Kraftstoff freigesetzten Entnahmekälte auf Basis einer Soll-Kühlleistung, einer Temperatur des Kühlkreislaufs, einer Nutzervorgabe und/oder eines Bedarfs des Kraftstoffverbrauchers und/oder auf Basis von Drücken und/oder Füllständen der mehreren Druckspeicher festzulegen. In diesem Zusammenhang kann es ferner vorteilhaft sein, dass die Druckspeicherteilmenge alle Druckspeicher umfasst, d. h. dass eine Steuerung der bei der Entnahme von Kraftstoff freigesetzten Entnahmekälte allein auf Basis der Teilvolumenströme und nicht durch eine entsprechende Auswahl von Druckspeichern erfolgt. Auf vorteilhafte Weise kann auch durch diesen Aspekt insgesamt eine bedarfsgerechte Steuerung der Kraftstoffentnahme und der Kälteerzeugung erreicht werden.

Gemäß einem weiteren Aspekt der Erfindung können nicht alle der mehreren Druckspeicher mit demselben Druck beaufschlagt sein. Mit anderen Worten kann der Speicherdruck der einzelnen Druckspeicher der mehreren Druckspeicher variieren. Beispielsweise kann einer der Druckspeicher mit einem Speicherdruck von 200 bar, ein weiterer mit einem Speicherdruck von 300 bar und ein dritter Druckspeicher mit einem Speicherdruck von 500 bar beaufschlagt sein. Aufgrund des unterschiedlichen Ausgangsdruckes bzw. der daraus resultierenden unterschiedlichen Druckdifferenzen bei der Entnahme kann - in Abhängigkeit von der Gasart - die Temperaturänderung und damit die erzeugte Entnahmekälte beeinflusst werden. Je nachdem, ob mehr oder weniger Entnahmekälte benötigt wird, können somit vorrangig Druckspeicher mit niedrigerem oder höherem Speicherdruck entleert werden.

Nach einem weiteren Aspekt der Erfindung kann die Entnahmeeinrichtung eine Druckmindereinrichtung zur Verminderung des Drucks des mit Druck beaufschlagten Kraftstoffs umfassen. Vorzugsweise dient die Druckmindereinrichtung dabei zur Verminderung des mit Speicherdruck beaufschlagten Kraftstoffs auf einen Betriebsdruck des Kraftstoffverbrauchers. Hierbei kann die Druckmindereinrichtung z. B. zumindest ein Expansionsventil bzw. Drosselventil umfassen, welches eine lokale Verengung im Strömungsquerschnitt aufweist. Weiterhin kann in diesem Zusammenhang z. B. die vorstehend erwähnte Ventilanordnung als Druckmindereinrichtung ausgebildet sein. Zudem oder alternativ kann die Druckmindereinrichtung jedoch auch zusätzlich zur vorgenannten Ventilanordnung bei der Vorrichtung zur Versorgung des Kraftstoffverbrauchers mit gasförmigem Kraftstoff vorhanden sein. Auf vorteilhafte Weise kann dadurch zum einen ein Absenken des Speicherdrucks auf den Betriebsdruck des Kraftstoffverbrauchers erfolgen, während gleichzeitig Expansionskälte freigesetzt werden kann, die sodann ebenfalls in den Kühlkreislauf eingespeist werden kann.

Gemäß einem weiteren Aspekt der Erfindung kann die Entnahmeeinrichtung über einen Wärmetauscher, der auch als Wärmeübertrager bezeichnet werden kann, thermisch an ein im Kühlkreislauf zirkulierendes Kühlmittel (z. B. Wasser, Öl und/oder Glykol) gekoppelt sein. Hierbei können an sich im Stand der Technik bekannte Konzepte, darunter z. B. Rohrbündel-, Lamellen- und/oder Plattenwärmetauscher, Verwendung finden. Auf vorteilhafte Weise kann dadurch eine möglichst gute thermische Ankopplung gewährleistet werden. In diesem Zusammenhang soll erwähnt sein, dass die Kraftstoffentnahme vorrangig zunächst ein Abkühlen des in den entsprechenden Druckspeichern verbleibenden Gases bewirkt. Durch ein weiteres bzw. anhaltendes Entleeren der entsprechenden Druckspeicher wird jedoch auch (bereits) abgekühltes Gas entnommen, sodass der Wärmetauscher nicht unmittelbar an den Druckspeichern angeordnet sein muss, sondern die thermische Kopplung an den Kühlkreislauf auch über ein Durchströmen mit entnommenem, vorzugsweise zuvor abgekühltem, Kraftstoff erreicht werden kann.

Um dabei auch in Betriebsphasen, in welchen wenig Kraftstoff entnommen wird und damit wenig Entnahmekälte freigesetzt wird, auf vorteilhafte Weise eine ausreichende Kühlleistung des Kühlkreislaufs sicherzustellen, kann nach einem weiteren Aspekt der Erfindung der Kühlkreislauf zusätzlich auch einen Luft/Kühlmittel-Wärmetauscher umfassen. Mittels dieser Komponente, die auch als Luftkühler bezeichnet werden kann, kann dabei unabhängig von der Freisetzung von Entnahmekälte bei der Kraftstoffentnahme eine Wärmeabgabe des Kühlmittels an die Umgebung erfolgen. Zudem oder alternativ kann der Kühlkreislauf auch eine Kühlmittelpumpe umfassen. Mittels dieser kann auf vorteilhafte Weise eine ausreichende Zirkulation von Kühlmittel im Kühlkreislauf gewährleistet werden.

Gemäß einem weiteren Aspekt der Erfindung kann der Kraftstoff Wasserstoff sein. Zudem oder alternativ kann es sich bei dem Kraftstoff jedoch z. B. auch um Erdgas, Methan, Ethan, Butan und/oder einen sonstigen unter Normalbedingungen gasförmigen Kraftstoff handeln.

Nach einem weiteren Aspekt der Erfindung kann der Kraftstoffverbraucher zumindest eine Brennstoffzelle und/oder eine Verbrennungskraftmaschine umfassen. Während hierbei unter einer Brennstoffzelle ein galvanisches Element verstanden werden soll, bei dem durch elektrochemische Oxidation des Kraftstoffs chemische Energie in elektrische Energie umgewandelt wird, soll unter einer Verbrennungskraftmaschine eine Wärmekraftmaschine verstanden werden, die durch innere Verbrennung von Kraftstoff mechanische Arbeit verrichtet.

Gemäß einem weiteren Aspekt der Erfindung kann der Kühlkreislauf ein Kühlkreislauf zur Kühlung des Kraftstoffverbrauchers sein. Wie vorstehend beschrieben, ist diese Variante besonders vorteilhaft, da mit einer hohen Motorleistung (und damit einer hohen Abwärmeerzeugung) in der Regel auch eine entsprechend hohe Kraftstoffentnahme (und damit eine entsprechend hohe Entnahmekälteerzeugung) einhergeht. Zudem oder alternativ können die mehreren Druckspeicher auch identisch ausgebildet sein. Alternativ dazu kann sich zumindest ein Teil der mehreren Druckspeicher, z. B. durch seine Bauform und/oder Größe, von den übrigen Druckspeichern unterscheiden. Letzteres Merkmal kann auf vorteilhafte Weise z. B. eine Unterbringung der Druckspeicher im Fahrzeug erleichtern. Weiterhin können zudem oder alternativ die mehreren Druckspeicher auch von einem gemeinsamen Gehäuse umhaust werden. Vorzugsweise sind die Druckspeicher dazu benachbart und/oder aneinander angrenzend angeordnet. Nach einem weiteren Aspekt der Erfindung können die mehreren Druckspeicher jedoch auch räumlich verteilt und/oder räumlich voneinander beabstandet sein, um dadurch auf vorteilhafte Weise z. B. die Unterbringung im Fahrzeug zu erleichtern.

Vorzugsweise handelt es sich bei dem Fahrzeug um ein Nutzfahrzeug. Mit anderen Worten kann es sich bei dem Fahrzeug um ein Fahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Fahrzeug um einen Lastkraftwagen, einen Omnibus und oder einen Sattelzug handeln. Daneben kann es sich bei dem Fahrzeug allerdings auch um ein Wasser- oder Luftfahrzeug handeln.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung einer Vorrichtung zur Versorgung eines Kraftstoffverbrauchers eines Fahrzeugs mit gasförmigem Kraftstoff gemäß einer ersten Ausführungsform der Erfindung;
- Figur 2:: eine schematische Darstellung einer Vorrichtung zur Versorgung eines Kraftstoffverbrauchers eines Fahrzeugs mit gasförmigem Kraftstoff gemäß einer zweiten Ausführungsform der Erfindung;
- Figur 3:: eine schematische Darstellung der Ausführungsform gemäß Figur 2 im Fall einer Entnahme aus einer anderen Druckspeicherteilmenge; und
- Figur 4:: eine schematische Darstellung eines Kraftfahrzeugs in Seitenansicht gemäß einer Ausführungsform der Erfindung.

Gleiche oder funktional äquivalente Elemente sind dabei in allen Figuren mit denselben Bezugszeichen bezeichnet und zum Teil nicht gesondert beschrieben.

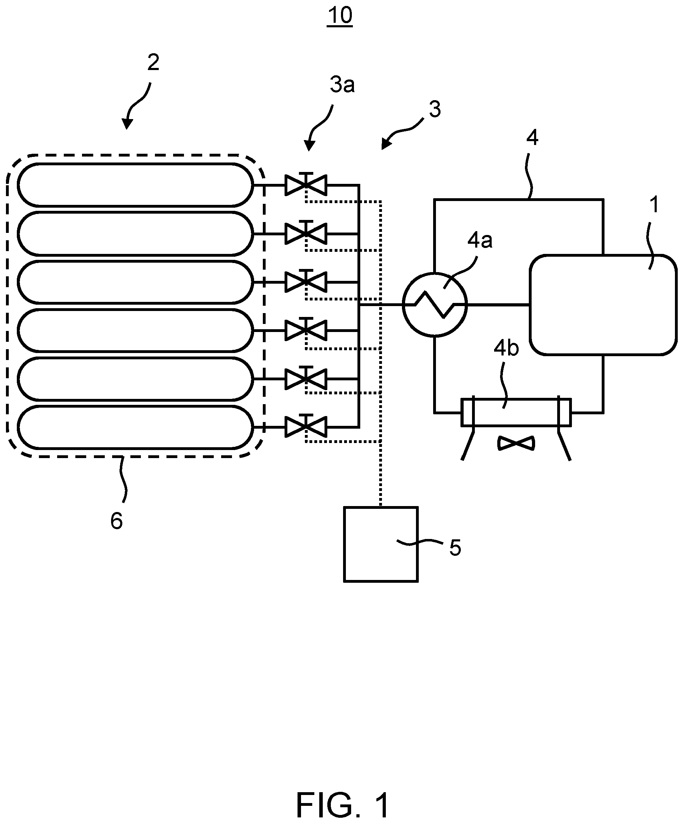

Figur 1 zeigt eine schematische Darstellung einer Vorrichtung 10 zur Versorgung eines Kraftstoffverbrauchers 1 (z. B. eine Verbrennungskraftmaschine) eines Fahrzeugs 20 mit gasförmigem Kraftstoff (z. B. Erdgas) gemäß einer ersten Ausführungsform der Erfindung. Die Vorrichtung 10 kann hierbei auch als Kraftstoffversorgungsvorrichtung bezeichnet werden. Die Vorrichtung 10 umfasst mehrere, vorliegend sechs, vorzugsweise von einem gemeinsamen Gehäuse 6 umhauste, Druckspeicher 2, zur Lagerung und Bereitstellung von mit Druck beaufschlagtem Kraftstoff. Lediglich beispielhaft kann der Kraftstoff (z. B. Erdgas) mit einem Druck, der auch als Speicherdruck bezeichnet werden kann, von 200 bar beaufschlagt sein.

Ferner umfasst die Vorrichtung 10 eine Entnahmeeinrichtung 3, die die mehreren Druckspeicher 2 mit dem Kraftstoffverbraucher 1 fluidisch verbindet. Vorliegend weist die Entnahmeeinrichtung 3 hierzu - lediglich beispielhaft - mehrere Rohrleitungen auf, die jeweils ausgehend von den einzelnen Druckspeichern 2 in eine gemeinsame Versorgungsleitung zum Kraftstoffverbraucher 1 münden. Um auf vorteilhafte Weise ein Nutzen einer bei einer Kraftstoffentnahme auftretenden Temperaturänderung, vorzugsweise einer bei der Entnahme von Kraftstoff freigesetzten Entnahmekälte, zu ermöglichen, ist die Entnahmeeinrichtung 3 an einen Kühlkreislauf 4 des Fahrzeugs 20 thermisch gekoppelt. Vorliegend handelt es sich bei dem Kühlkreislauf 4 beispielhaft um einen Kühlkreislauf 4 zur Kühlung des Kraftstoffverbrauchers 1.

Die thermische Kopplung zwischen der Entnahmeeinrichtung 3 und dem Kühlkreislauf 4 erfolgt hierbei über einen Wärmetauscher 4a, der einerseits von Kühlmittel des Kühlkreislaufs 4 als wärmeabgebendes Medium und andererseits von, vorzugsweise unterkühltem, Kraftstoff als wärmeaufnehmendes Medium durchströmbar ist. Zur weiteren Kühlung kann der Kühlkreislauf 4 zusätzlich auch über einen Luft/Kühlmittel-Wärmetauscher 4b verfügen, mittels dessen Wärme vom Kühlmittel an die Umgebungsluft abgegeben werden kann. Weiterhin kann der Kühlkreislauf 4 eine (nicht explizit dargestellte) Kühlmittelpumpe 4c umfassen, wobei diese auch in eine an den Kühlkreislauf angeschlossene Komponente, z. B. in den Kraftstoffverbraucher 1, integriert sein kann. Durch die vorgestehend erwähnte Kopplung, vorliegend über den Wärmetauscher 4a, wird auf vorteilhafte Weise eine Nutzung einer durch die Kraftstoffentnahme induzierten Temperaturänderungen des Kraftstoffs ermöglicht, da zusätzlich zur direkten Kühlung des Kraftstoffverbraucher 1 durch die Einspritzung/Eindüsung von, vorzugsweise unterkühltem, Kraftstoff, auch eine indirekte Kühlung des Kraftstoffverbrauchers 1 über die zuvor in den Kühlkreislauf 4 eingekoppelte Entnahmekälte ermöglicht wird. Insgesamt kann dadurch ein effizienter Betrieb des mit gasförmigem Kraftstoff betriebenen Fahrzeugs 20 erreicht werden.

Um auf vorteilhafte Weise eine Steuerung der erzeugten und damit (vorliegend über den Wärmetauscher 4a) in den Kühlkreislauf 4 eingespeisten Wärme- bzw. Kältemenge zu ermöglichen, kann die Entnahmeeinrichtung 3 der Vorrichtung 10 ferner für eine gezielte Kraftstoffentnahme aus den mehreren Druckspeichern 2 ausgebildet sein. Dazu kann die Entnahmeeinrichtung 3 eine Ventilanordnung 3a umfassen, mittels derer eine Entnahme von Kraftstoff aus jedem der mehreren Druckspeicher 2 einzeln steuerbar ist. Mit anderen Worten kann mittels der Ventilanordnung 3a jeder der mehreren Druckspeicher 2 unabhängig von den übrigen Druckspeichern geöffnet und/oder geschlossen werden. Über die Ventilanordnung 3a kann hierbei sogleich auch eine Verminderung des Drucks des jeweiligen Speicherdrucks auf einen Betriebsdruck des Kraftstoffverbrauchers 1 erfolgen. D. h., die Ventilanordnung 3a kann zugleich auch als Druckmindereinrichtung dienen. Zusätzlich oder alternativ kann die Entnahmeeinrichtung 3 jedoch auch eine anderweitige Druckmindereinrichtung, z. B. nahe des Wärmetauschers 4a, umfassen.

Zur Ansteuerung der Ventilanordnung 3a kann die Entnahmeeinrichtung 3 ferner eine Ventilsteuereinrichtung 5 umfassen, die zum einen ausgebildet ist, eine Druckspeicherteilmenge festzulegen, die angibt, aus welchen der mehreren Druckspeicher 2 Kraftstoff entnommen werden soll, und zum anderen ausgebildet ist, die Ventilanordnung 3a in Abhängigkeit von der festgelegten Druckspeicherteilmenge derart anzusteuern, dass dem Kraftstoffverbraucher 1 nur Kraftstoff aus der festgelegten Druckspeicherteilmenge zugeführt wird. Durch diese gezielte Ansteuerung kann auf vorteilhafte Weise, beispielsweise indem einzelne Druckspeicher besonders stark entleert werden und/oder vorrangig Druckspeicher mit aktuell hohem Speicherdruck entleert werden, eine an die aktuelle Betriebsphase angepasste Steuerung der bei der Entnahme auftretenden Temperaturänderungen erreicht werden.

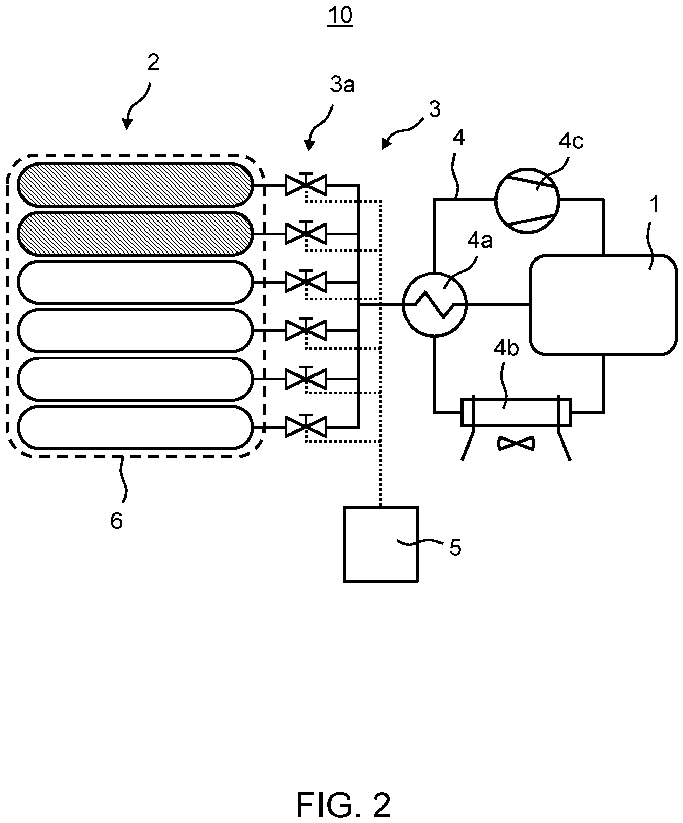

Diese gezielte Entnahme aus einer festgelegten Druckspeicherteilmenge soll beispielhaft nochmals in Figur 2 verdeutlicht werden. Figur 2 zeigt dazu eine schematische Darstellung einer Vorrichtung 10 zur Versorgung eines Kraftstoffverbrauchers 1 eines Fahrzeugs 20 mit gasförmigem Kraftstoff gemäß einer zweiten Ausführungsform der Erfindung. Abgesehen von einer im Kühlkreislauf 4 explizit vorhandenen Kühlmittelpumpe 4c entspricht der grundlegende Aufbau dieser Kraftstoffversorgungsvorrichtung 10 hierbei der in Figur 1 dargestellten Ausführungsform. Die Hervorhebungen der obersten beiden Druckspeicher 2 in Figur 2 sollen hierbei die festgelegte Druckspeicherteilmenge verdeutlichen; d. h. diejenigen Druckspeicher 2, aus welchen in einer bestimmten Betriebsphase konkret Kraftstoff entnommen werden soll. Anstelle einer gleichzeitigen Entnahme aus allen der mehreren Druckspeicher 2 soll hier somit nur eine Entnahme aus den beiden hervorgehobenen Druckspeichern erfolgen. Die Festlegung der Druckspeicherteilmenge, die abhängig von aktuellen Betriebsbedingungen variieren kann, kann dabei durch die Ventilsteuereinrichtung 5 erfolgen. Dazu kann die Ventilsteuereinrichtung 5 z. B. ausgebildet sein, auf Basis einer Soll-Kühlleistung des Kühlkreislaufs 4, einer Temperatur des Kühlkreislaufs 4, eines Füllstands der Druckspeicher, einer Nutzervorgabe und/oder eines Kraftstoffbedarfs des Kraftstoffverbrauchers 1 die Druckspeicherteilmenge festzulegen. Beispielsweise kann die Ventilsteuereinrichtung 5 ausgebildet sein, im Falle einer aktuell hohen Soll-Kühlleistung des Kühlkreislaufs 4 vorrangig eine Entnahme aus nur wenigen Druckspeichern, d. h. einer kleinen Druckspeicherteilmenge, festzulegen, um dadurch einen starken Druckabfall in den entsprechenden Druckspeichern und damit eine hohe Freisetzung von Entnahmekälte zu bewirken. Beispielsweise würde im Fall von Wasserstoff (cₚ = 14,2 kJ/kg/K) bei einer angenommenen Temperaturdifferenz von 100 K zur Rücklauftemperatur des Kühlkreislaufs 4 und bei einem im Kraftfahrzeugbereich üblicherweise realisierbaren Massenstrom von 7,8 g/s eine Kühlleistung von ca. 11 kW resultieren.

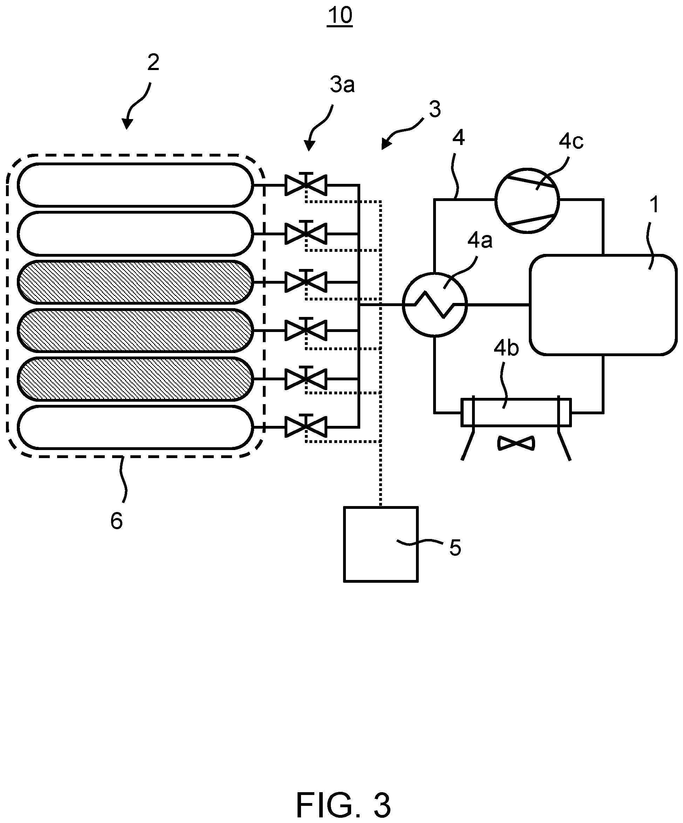

Zur Verdeutlichung der Festlegung der Druckspeicherteilmenge zeigt Figur 3 nochmals eine schematische Darstellung der Ausführungsform gemäß Figur 2 im Fall einer Entnahme aus einer anderen Druckspeicherteilmenge zu einem anderen Betriebszeitpunkt. Im Gegensatz zu dem im Figur 2 gezeigten Fall erfolgt hierbei eine Entnahme aus drei statt zwei Druckspeichern, wobei es sich zugleich auch um andere Druckspeicher als im Fall von Figur 2 handelt. Neben einer Festlegung, aus wie vielen bzw. welchen der Druckspeicher eine Kraftstoffentnahme erfolgen soll, kann die Ventilsteuereinrichtung 5 vorzugsweise ferner auch dazu ausgebildet sein, festzulegen, welche Gasmenge bzw. welcher Volumenfluss dabei gerade aus den entsprechenden Druckspeichern der Druckspeicherteilmenge entnommen werden soll. Hierbei kann die Ventilanordnung 3a ausgebildet sein, Volumenströme aus den einzelnen Druckspeichern der festgelegten Druckspeicherteilmenge in Abhängigkeit von einer Ansteuerung durch die Ventilsteuereinrichtung zu steuern. Mit anderen Worten soll die Ventilanordnung 3a eine, vorzugsweise kontinuierliche oder stufenweise, Variation der Volumenströme der jeweiligen Druckspeicher ermöglichen können. Auf vorteilhafte Weise kann dadurch insgesamt eine bedarfsgerechte Steuerung der Kraftstoffentnahme und der Kälteerzeugung erreicht werden.

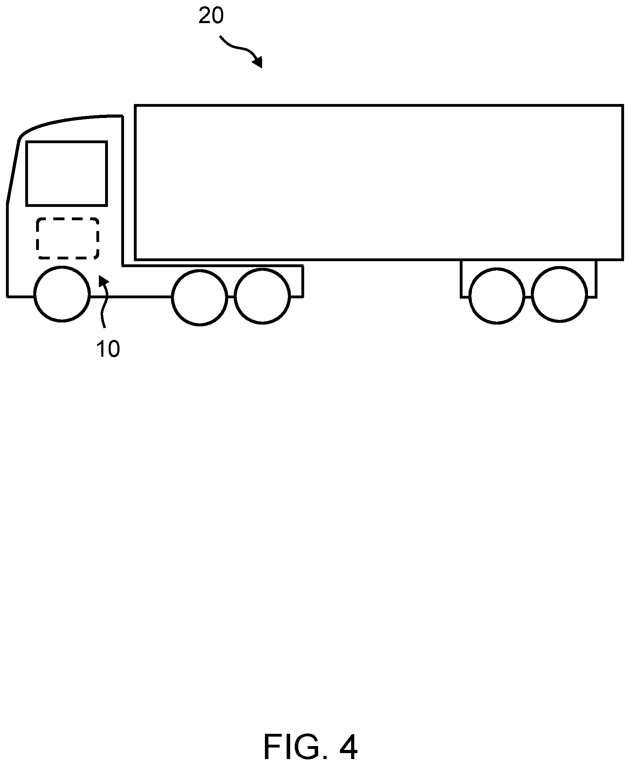

Figur 4 zeigt eine schematische Darstellung eines Kraftfahrzeugs 20 in Seitenansicht gemäß einer Ausführungsform der Erfindung. Das Kraftfahrzeug 20, bei welchem es sich vorliegend lediglich beispielhaft um ein Sattelkraftfahrzeug, d. h. ein Gespann aus einer Sattelzugmaschine und einem Sattelanhänger, handelt, soll hierbei einen Kraftstoffverbraucher 1 (z. B. eine Verbrennungskraftmaschine) sowie eine Vorrichtung 10 zur Versorgung des Kraftstoffverbrauchers mit gasförmigem Kraftstoff (z. B. Erdgas), wie in diesem Dokument beschrieben, umfassen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, solange sie in den Umfang der Ansprüche fallen. Folglich soll die Erfindung nicht auf die offenbarten Ausführungsbeispiele begrenzt sein, sondern soll alle Ausführungsbeispiele umfassen, die in den Umfang der beigefügten Patentansprüche fallen.

### Bezugszeichenliste

- 1: Kraftstoffverbraucher
- 2: Mehrere Druckspeicher
- 3: Entnahmeeinrichtung
- 3a: Ventilanordnung
- 4: Kühlkreislauf
- 4a: Wärmetauscher
- 4b: Luft/Kühlmittel-Wärmetauscher
- 4c: Kühlmittelpumpe
- 5: Ventilsteuereinrichtung
- 6: Gehäuse
- 10: Vorrichtung zur Versorgung eines Kraftstoffverbrauchers mit Kraftstoff
- 20: Fahrzeug

## Patentansprüche

1. Fahrzeug (20), vorzugsweise Nutzfahrzeug, aufweisend einen Kraftstoffverbraucher (1) und eine Vorrichtung (10) zur Versorgung des Kraftstoffverbrauchers (1), vorzugsweise einer Brennstoffzelle, mit gasförmigen Kraftstoff, wobei die Vorrichtung (10) umfasst:
a) mehrere Druckspeicher (2) zur Lagerung und Bereitstellung von mit Druck beaufschlagtem Kraftstoff; und
b) eine Entnahmeeinrichtung (3), die die mehreren Druckspeicher (2) mit dem Kraftstoffverbraucher (1) fluidisch verbindet;
wobei die Entnahmeeinrichtung (3) thermisch an einen Kühlkreislauf (4) des Fahrzeugs (20), vorzugsweise einen Kühlkreislauf (4) zur Kühlung des Kraftstoffverbrauchers (1), gekoppelt ist;
wobei die Entnahmeeinrichtung (3) folgende Komponenten umfasst:
a) eine Ventilanordnung (3a) mittels derer eine Entnahme von Kraftstoff aus jedem der mehreren Druckspeichern einzeln steuerbar ist,
b) eine Ventilsteuereinrichtung (5), die ausgebildet ist,
- eine Druckspeicherteilmenge festzulegen, die angibt, aus welchen der mehreren Druckspeicher Kraftstoff entnommen werden soll, und
- die Ventilanordnung (3a) in Abhängigkeit von der festgelegten Druckspeicherteilmenge derart anzusteuern, dass dem Kraftstoffverbraucher (1) nur Kraftstoff aus der festgelegten Druckspeicherteilmenge zugeführt wird;
**dadurch gekennzeichnet, dass** die Ventilsteuereinrichtung (5) ausgebildet ist, die Druckspeicherteilmenge umso kleiner festzulegen,
- je größer ein aktueller und/oder zu erwartender Wärmeeintrag in den Kühlkreislauf (4) ist; und/oder
- je größer eine aktuelle und/oder zu erwartende Soll-Kühlleistung des Kühlkreislaufs (4) ist.

2. Fahrzeug (20) nach Anspruch 1, **dadurch gekennzeichnet, dass** die Ventilsteuereinrichtung (5) ausgebildet ist, die Druckspeicherteilmenge derart festzulegen, dass eine bei der Entnahme von Kraftstoff freigesetzte Entnahmekälte maximiert wird.

3. Fahrzeug (20) nach einem der vorherigen Ansprüche, **dadurch gekennzeichnet, dass** die Ventilsteuereinrichtung (5) ausgebildet ist, die Druckspeicherteilmenge zur Vergrößerung einer bei der Entnahme von Kraftstoff freigesetzten Entnahmekälte derart festzulegen,
- dass bei der Entnahme von Kraftstoff ein möglichst hoher Druckabfall in der Druckspeicherteilmenge erfolgt; und/oder
- bei der Entnahme von Kraftstoff in der Druckspeicherteilmenge ein höherer Druckabfall als im Fall einer gleichmäßigen Entnahme aus den mehreren Druckspeichern (2) erfolgt.

4. Fahrzeug (20) nach einem der vorherigen Ansprüche, **dadurch gekennzeichnet, dass** die Ventilsteuereinrichtung (5) ausgebildet ist, in einer Entnahmephase die mehreren Druckspeicher (2) nacheinander zu entleeren.

5. Fahrzeug (20) nach einem der vorhergehenden Ansprüche, **dadurch gekennzeichnet, dass** die Entnahmeeinrichtung (3), ausgebildet ist, in einer Nicht-Entnahmephase, vorzugsweise in einer Schubbetriebsphase und/oder einer Rekuperationsphase des Fahrzeugs (20), einen Druckausgleich zwischen den mehreren Druckspeichern (2) vorzunehmen.

6. Fahrzeug (20) nach einem der vorherigen Ansprüche, **dadurch gekennzeichnet, dass** die Ventilsteuereinrichtung (5) ausgebildet ist, die Druckspeicherteilmenge
- auf Basis einer Soll-Kühlleistung und/oder einer Temperatur des Kühlkreislaufs (4) festzulegen; und/oder
- auf Basis von Drücken und/oder Füllständen der mehreren Druckspeicher (2) festzulegen; und/oder
- auf Basis einer Nutzervorgabe und/oder eines Kraftstoffbedarfs des Kraftstoffverbrauchers (1) festzulegen.

7. Fahrzeug (20) nach einem der vorherigen Ansprüche, **dadurch gekennzeichnet, dass** die Ventilanordnung (3a) ausgebildet ist, Teilvolumenströme aus den einzelnen Druckspeichern der festgelegten Druckspeicherteilmenge in Abhängigkeit von einer Ansteuerung durch die Ventilsteuereinrichtung (5) zu steuern, und die Ventilsteuereinrichtung (5) ausgebildet ist, die Teilvolumenströme derart festzulegen, dass eine bei der Entnahme von Kraftstoff freigesetzte Entnahmekälte maximiert wird.

8. Fahrzeug (20) nach einem der vorhergehenden Ansprüche, **dadurch gekennzeichnet, dass** nicht alle der mehreren Druckspeicher (2) mit demselben Druck beaufschlagt sind.

9. Fahrzeug (20) nach einem der vorhergehenden Ansprüche, **dadurch gekennzeichnet, dass** die Entnahmeeinrichtung (3) eine Druckmindereinrichtung zur Verminderung des Drucks des mit Druck beaufschlagten Kraftstoffs umfasst, wobei vorzugsweise die Druckmindereinrichtung zumindest ein Expansionsventil umfasst.

10. Fahrzeug (20) nach einem der vorhergehenden Ansprüche, **dadurch gekennzeichnet, dass** die Entnahmeeinrichtung (3) über einen Wärmetauscher (4a) thermisch an ein im Kühlkreislauf (4) zirkulierendes Kühlmittel gekoppelt ist.

11. Fahrzeug (20) nach einem der vorhergehenden Ansprüche, **dadurch gekennzeichnet, dass** der Kühlkreislauf (4) eine Kühlmittelpumpe (4c) und/oder einen Luft/Kühlmittel-Wärmetauscher (4b) umfasst.

12. Fahrzeug (20) nach einem der vorherigen Ansprüche, **dadurch gekennzeichnet,**
a) **dass** der Kraftstoff Wasserstoff ist; und/oder
b) **dass** der Kraftstoffverbraucher (1) zumindest eine Brennstoffzelle und/oder eine Verbrennungskraftmaschine umfasst; und/oder
c) **dass** der Kühlkreislauf (4) ein Kühlkreislauf (4) zur Kühlung des Kraftstoffverbrauchers (1) ist; und/oder
d) **dass** die mehreren Druckspeicher (2) identisch ausgebildet sind und/oder von einem gemeinsamen Gehäuse (6) umhaust werden.

## Claims

1. Vehicle (20), preferably a commercial vehicle, comprising a fuel consumer (1) and a device (10) for supplying the fuel consumer (1), preferably a fuel cell, with gaseous fuel, wherein the device (10) comprises:
a) a plurality of pressure vessels (2) for storing and providing pressurized fuel; and
b) a withdrawal arrangement (3) which fluidically connects the plurality of pressure vessels (2) to the fuel consumer (1);
wherein the withdrawal arrangement (3) is thermally coupled to a cooling circuit (4) of the vehicle (20), preferably a cooling circuit (4) for cooling the fuel consumer (1);
wherein the withdrawal arrangement (3) comprises the following components:
a) a valve arrangement (3a) by means of which withdrawal of fuel from each of the plurality of pressure vessels is individually controllable;
b) a valve control unit (5) configured to
- specify a pressure-vessel subset indicating from which of the plurality of pressure vessels fuel is to be withdrawn, and
- actuate the valve arrangement (3a) depending on the specified pressure-vessel subset such that only fuel from the specified pressure-vessel subset is supplied to the fuel consumer (1);
**characterized in that** the valve control unit (5) is configured to set the pressure-vessel subset the smaller,
- the greater a current and/or an expected heat input into the cooling circuit (4); and/or
- the greater a current and/or an expected target cooling capacity of the cooling circuit (4).

2. Vehicle (20) according to claim 1, **characterized in that** the valve control unit (5) is configured to specify the pressure-vessel subset such that withdrawal cooling released during withdrawal of fuel is maximized.

3. Vehicle (20) according to any one of the preceding claims, **characterized in that** the valve control unit (5) is configured to specify the pressure-vessel subset so as to increase withdrawal cooling released during withdrawal of fuel,
- such that, during withdrawal of fuel, the highest possible pressure drop occurs in the pressure-vessel subset; and/or
- such that, during withdrawal of fuel, a higher pressure drop occurs in the pressure-vessel subset than in the case of uniform withdrawal from the plurality of pressure vessels (2).

4. Vehicle (20) according to any one of the preceding claims, **characterized in that** the valve control unit (5) is configured to empty the plurality of pressure vessels (2) successively during a withdrawal phase.

5. Vehicle (20) according to any one of the preceding claims, **characterized in that** the withdrawal arrangement (3) is configured, in a non-withdrawal phase, preferably in an overrun phase and/or a recuperation phase of the vehicle (20), to perform pressure equalization between the plurality of pressure vessels (2).

6. Vehicle (20) according to any one of the preceding claims, **characterized in that** the valve control unit (5) is configured to specify the pressure-vessel subset
- on the basis of a target cooling capacity and/or a temperature of the cooling circuit (4); and/or
- on the basis of pressures and/or fill levels of the plurality of pressure vessels (2); and/or
- on the basis of a user specification and/or a fuel demand of the fuel consumer (1).

7. Vehicle (20) according to any one of the preceding claims, **characterized in that** the valve arrangement (3a) is configured to control partial streams from the individual pressure vessels of the specified pressure-vessel subset as a function of actuation by the valve control unit (5), and that the valve control unit (5) is configured to specify the partial streams such that withdrawal cooling released during withdrawal of fuel is maximized.

8. Vehicle (20) according to any one of the preceding claims, **characterized in that** not all of the plurality of pressure vessels (2) are pressurized to the same pressure.

9. Vehicle (20) according to any one of the preceding claims, **characterized in that** the withdrawal arrangement (3) comprises a pressure-reducing device for reducing the pressure of the pressurized fuel, preferably the pressure-reducing device comprising at least one expansion valve.

10. Vehicle (20) according to any one of the preceding claims, **characterized in that** the withdrawal arrangement (3) is thermally coupled, via a heat exchanger (4a), to a coolant circulating in the cooling circuit (4).

11. Vehicle (20) according to any one of the preceding claims, **characterized in that** the cooling circuit (4) comprises a coolant pump (4c) and/or an air/coolant heat exchanger (4b).

12. Vehicle (20) according to any one of the preceding claims, **characterized in that**
a) the fuel is hydrogen; and/or
b) the fuel consumer (1) comprises at least one fuel cell and/or an internal combustion engine; and/or
c) the cooling circuit (4) is a cooling circuit (4) for cooling the fuel consumer (1); and/or
d) the plurality of pressure vessels (2) are identically configured and/or are enclosed by a common housing (6).

## Revendications

1. Véhicule (20), de préférence véhicule utilitaire, comportant un consommateur de carburant (1) et un dispositif (10) d'alimentation du consommateur de carburant (1), de préférence d'une pile à combustible, en carburant gazeux, le dispositif (10) comprenant :
a) plusieurs accumulateurs de pression (2) destinés à stocker et à fournir du carburant soumis à l'action d'une pression ; et
b) un système de prélèvement (3), qui relie fluidiquement les plusieurs accumulateurs de pression (2) au consommateur de carburant (1) ;
le système de prélèvement (3) étant couplé thermiquement à un circuit de refroidissement (4) du véhicule (20), de préférence à un circuit de refroidissement (4) destiné à refroidir le consommateur de carburant (1) ;
le système de prélèvement (3) comprenant des composants suivants :
a) un ensemble de soupape (3a), au moyen duquel un prélèvement de carburant depuis chacun des plusieurs accumulateurs de pression peut être commandé individuellement,
b) un système de commande (5) de soupape, qui est réalisé
- pour fixer une quantité partielle d'accumulateurs de pression, qui indique l'accumulateur de pression parmi les plusieurs accumulateurs de pression, depuis lequel du carburant est censé être prélevé, et
- pour piloter l'ensemble de soupape (3a) en fonction de la quantité partielle d'accumulateur de pression fixée de telle manière que n'est amené au consommateur de carburant (1) que du carburant issu de la quantité partielle d'accumulateurs de pression fixée ; **caractérisé en ce que** le système de commande (5) de soupape est réalisé pour fixer la quantité partielle d'accumulateurs de pression de manière d'autant plus faible
- qu'un apport de chaleur dans le circuit de refroidissement (4) actuel et/ou attendu est important ; et/ou
- qu'une puissance de refroidissement théorique du circuit de refroidissement (4) actuelle et/ou attendue est importante.

2. Véhicule (20) selon la revendication 1, **caractérisé en ce que** le système de commande (5) de soupape est réalisé pour fixer la quantité partielle d'accumulateurs de pression de manière à maximiser le froid de prélèvement dégagé lors du prélèvement de carburant.

3. Véhicule (20) selon l'une des revendications précédentes, **caractérisé en ce que** le système de commande (5) de soupape est réalisé pour fixer la quantité partielle d'accumulateurs de pression pour augmenter un froid de prélèvement dégagé lors du prélèvement de carburant de manière à
- produire, lors du prélèvement de carburant, une chute de pression aussi élevée que possible dans la quantité partielle d'accumulateurs de pression ; et/ou
- produire dans la quantité partielle d'accumulateurs de pression, lors du prélèvement de carburant, une chute de pression plus élevée que dans le cas d'un prélèvement homogène depuis les plusieurs accumulateurs de pression (2).

4. Véhicule (20) selon l'une des revendications précédentes, **caractérisé en ce que** le système de commande (5) de soupape est réalisé pour vider les uns après les autres les plusieurs accumulateurs de pression (2) dans une phase de prélèvement.

5. Véhicule (20) selon l'une des revendications précédentes, **caractérisé en ce que** le système de prélèvement (3) est réalisé pour effectuer dans une phase de non-prélèvement, de préférence dans une phase de régime de poussée et/ou dans une phase de récupération du véhicule (20), une compensation de pression entre les plusieurs accumulateurs de pression (2).

6. Véhicule (20) selon l'une des revendications précédentes, **caractérisé en ce que** le système de commande (5) de soupape est réalisé pour fixer la quantité partielle d'accumulateurs de pression
- sur la base d'une puissance de refroidissement théorique et/ou d'une température du circuit de refroidissement (4) ; et/ou
- sur la base de pressions et/ou de niveaux de remplissage des plusieurs accumulateurs de pression (2) ; et/ou
- sur la base d'une spécification d'utilisateur et/ou d'un besoin en carburant du consommateur de carburant (1) .

7. Véhicule (20) selon l'une des revendications précédentes, **caractérisé en ce que** l'ensemble de soupape (3a) est réalisé pour commander des débits volumiques partiels provenant des divers accumulateurs de pression de la quantité partielle fixée d'accumulateurs de pression en fonction d'un pilotage par le système de commande (5) de soupape, et le système de commande (5) de soupape est réalisé pour fixer les débits volumiques partiels de manière à maximiser le froid de prélèvement dégagé lors du prélèvement de carburant.

8. Véhicule (20) selon l'une des revendications précédentes, **caractérisé en ce que** l'ensemble des plusieurs accumulateurs de pression (2) n'est pas exposé à l'action de la même pression.

9. Véhicule (20) selon l'une des revendications précédentes, **caractérisé en ce que** le système de prélèvement (3) comprend un système de réduction de pression destiné à réduire la pression du carburant soumis à l'action d'une pression, le système de réduction de pression comprenant de préférence au moins une soupape de détente.

10. Véhicule (20) selon l'une des revendications précédentes, **caractérisé en ce que** le système de prélèvement (3) est couplé thermiquement à un liquide de refroidissement circulant dans le circuit de refroidissement (4) par un échangeur de chaleur (4a).

11. Véhicule (20) selon l'une des revendications précédentes, **caractérisé en ce que** le circuit de refroidissement (4) comprend une pompe (4c) de liquide de refroidissement et/ou un échangeur de chaleur air/liquide de refroidissement (4b).

12. Véhicule (20) selon l'une des revendications précédentes, **caractérisé en ce**
a) **que** le carburant est de l'hydrogène ; et/ou
b) **que** le consommateur de carburant (1) comprend au moins une pile à combustible et/ou un moteur à combustion interne ; et/ou
c) **que** le circuit de refroidissement (4) est un circuit de refroidissement (4) destiné à refroidir le consommateur de carburant (1) ; et/ou
d) **que** les plusieurs accumulateurs de pression (2) sont réalisés de manière identique et/ou sont logés par un boîtier (6) commun.
